# EUROPÄISCHE PATENTANMELDUNG

(11) **EP 0 859 474 A2**
(43) Veröffentlichungstag der Anmeldung: **19.08.1998**
(21) Anmeldenummer: 98100420.3
(22) Anmeldetag: 13.01.1998
(51) Int. Cl.: H04B 7/155

(54) **Repeater zur Übertragung hochfrequenter Signalen zwischen einer Basisstation und Mobilstationen**

(30) Priorität: 13.02.1997 DE 19705395
(71) Anmelder: MIKOM GmbH, 86675 Buchdorf (DE)
(72) Erfinder: Schmidt, Karl-Heinz, 86753 Möttingen-Balgheim (DE)
(74) Vertreter: Rapp, Bertram, Dr.

(57) **Zusammenfassung**

Die Erfindung betrifft einen Repeater (10) zur Übertragung hochfrequenter Signale zwischen einer Basisstation (8) und Mobilstationen (9), mit einem ersten Anschluß (1) für eine Anbindungs-antenne (13), einem zweiten Anschluß (2) für eine Versorgungsantenne (14) und mindestens einer zwischen diesen Anschlüssen (1, 2) liegenden Signalaufbereitungsschaltung (3, 3'). Bei derartigen, bekannten Repeatern ergeben sich insbesondere aufgrund der Dopplerverschiebung der übertragenen Trägerfrequenzen häufig schlechte Übertragungsverhältnisse.

Die Aufgabe, einen Repeater so weiterzubilden, daß auch bei in Kraftfahrzeugen und Zügen befindlichen Mobilstationen eine gute Übertragungsqualität gewährleistet ist, wird dadurch gelöst, daß mindestens eine Frequenzkorrekturschaltung (5, 6) vorgesehen ist, welche die Trägerfrequenz eines von einem Anschluß (1, 2) kommenden Signals mit einer Sollfrequenz vergleicht und bei Feststellung einer Abweichung eine Frequenzkorrektur bewirkt, wobei das korrigierte Signal dem anderen Anschluß (2, 1) zugeführt wird.

## Beschreibung

Der Erfindung betrifft einen Repeater nach dem Oberbegriff des Anspruchs 1.

Derartige Repeater, meist in Form von Repeater-Verstärkern, sind in digitalen Mobilfunksystemen, beispielsweise GSM 900, DCS 1800, PCS 1900 und TERTA weit verbreitet. Solche Repeater-Verstärker sind beispielsweise beschrieben in den Druckschriften EP 215 479 A2, EP 681 374 A1, US 4,754,495 und US 5,095,528. Diese üblichen Repeater-Verstärker weisen einen Anschluß für eine Anbindungsantenne und einen Anschluß für eine Versorgungsantenne sowie eine zwischen den beiden Anschlüssen liegende Signalaufbereitungsschaltung auf. Die Anbindungsantenne ist hierbei auf die Basisstation ausgerichtet und die Versorgungsantenne auf einen bestimmten Winkelbereich, in welchem sich zu versorgende Mobilstationen befinden können. Die Signalaufbereitungsschaltung weist in der Regel Filter und vor allem Verstärker auf Üblicherweise weist ein Repeater-Verstärker zwei Signalaufbereitungsschaltungen auf, und zwar eine im Down-link-Weg zur Weiterleitung der von der Basisstation kommenden Signale an die Mobilstationen und eine im Up-link-Weg zur Weiterleitung der von den Mobilstationen kommenden Signale an die Basisstation.

Bei bekannten Funksystemen ergeben sich häufig schlechte Übertragungsverhältnisse, wenn sich die Mobilstationen bewegen. Dies ist beispielsweise in Kraftfahrzeugen und vor allem in Zügen der Fall, und zwar insbesondere dann, wenn sich die Mobilstation auf die Basisstation zu oder sich von dieser fortbewegt. Der physikalische Grund für die dann festgestellte schlechte Übertragungsqualität liegt in der Doppler-Verschiebung der übertragenen Trägerfrequenzen, aufgrund der die Träger-frequenz des Übertragungskanals sich in Abhängigkeit der Relativgeschwindigkeit zwischen Basisstation und Mobilstation ändert. Da der Effekt geschwindigkeitsabhängig ist, wird er mit zunehmender Geschwindigkeit störender, wobei es je nach den verwendeten Standards verschiedene Grenzwerte gibt, bei denen die Übertragung von Nachrichten nicht mehr möglich ist.

Es besteht daher die Aufgabe, einen Repeater so weiterzubilden, daß auch bei in Kraftfahrzeugen und Zügen befindlichen Mobilstationen eine gute Übertragungsqualität gewährleistet ist.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird im folgenden unter Bezugnahme auf die begleitenden Zeichnungen näher erläutert, welche zeigen:
- **Fig. 1**: eine schematische Darstellung eines Repeaters, welcher an eine Basisstation angebunden ist und Mobilstationen versorgt;
- **Fig. 2**: ein Blockschaltbild des Repeaters aus Figur 1.

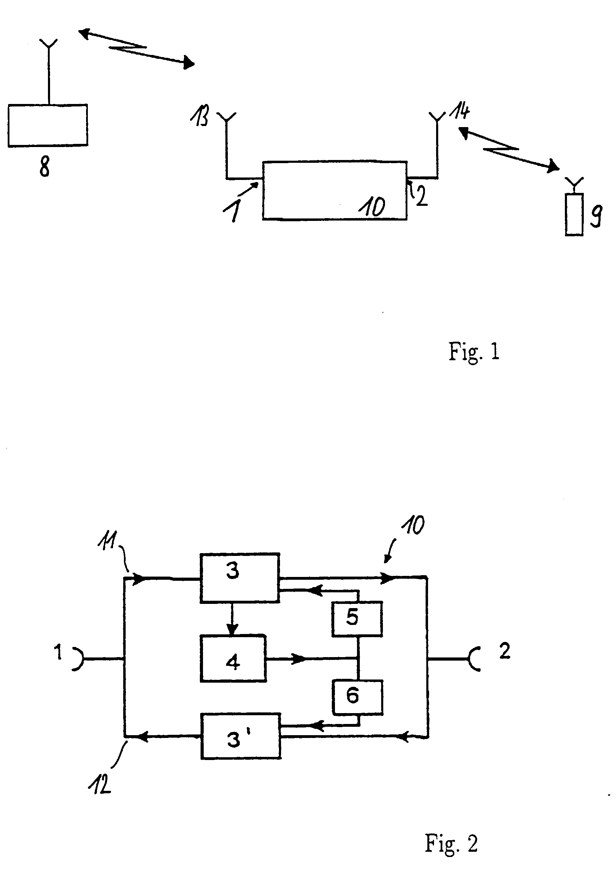

Figur 1 zeigt einen typischen Repeater-Verstärker 10 mit einem ersten Anschluß 1 für eine Anbindungsantenne 13 und einem zweiten Anschluß 2 für eine Versorgungsantenne 14. Über die Anbindungsantenne 13 kommuniziert der Repeater 10 mit einer Basisstation 8 und über die Versorgungsantenne 14 mit diversen Mobilstationen 9, von denen nur eine dargestellt ist. Der Weg von von der Basisstation 8 über den Repeater 10 zu den Mobilstationen 9 wird als Down-link bezeichnet, der umgekehrte Weg als Up-link. Typischerweise werden derartige Repeateranordnungen für digitale Telefonsysteme benutzt, wobei hochfrequente, phasenmodulierte Signale mit einer Trägenfrequenz eingesetzt werden.

Figur 2 zeigt schematisch den inneren Aufbau des Repeaters 10 anhand eines Blockschaltbildes. Zwischen dem ersten Anschluß 1, welcher zur Anbindungsantenne 13 führt, und dem zweiten Anschluß 2, welcher zur Versorgungsantenne 14 führt, befinden sich zwei parallele Wege, nämlich ein Down-link Weg 11 und ein Up-link Weg 12. Die Parallelschaltung erfolgt durch (nicht dargestellte) Frequenzweichen im Bereich der Anschlüsse 1 und 2. Im Down-link Weg 11 befindet sich eine erste Signalaufbereitungsschaltung 3, welche im Prinzip der eines herkömmlichen Repeaters entspricht, also Filter und Verstärker aufweist. Eine entsprechende Signalaufbereitungsschaltung 3' befindet sich im Up-link Weg 12.

Im Down-link Weg 11 befindet sich, bei der ersten Signalaufbereitungsschaltung 3, eine Abzweigung, welche zu einer Frequenzbestimmungsschaltung 4 führt. Diese Frequenzbestimmungsschaltung 4 ist in an sich bekannter Weise aufgebaut und kann die Trägerfrequenz des ihr zugeführten Signals bestimmen. Der Ausgang der Frequenzbestimmungsschaltung 4 ist mit den Eingängen von zwei Frequenzkorrekturschaltungen 5 und 6 verbunden, welche jeweils in der Lage sind, den ihnen von der Frequenzbestimmungsschaltung 4 zugeführten Frequenzwert mit einem Sollwert zu vergleichen und in Abhängigkeit dieses Vergleichs die Signalaufbereitungsschaltungen 3 bzw. 3' anzusteuern. Hierbei ist die Frequenzkorrekturschaltung 5 der ersten Signalaufbereitungsschaltung 3 und die Frequenzkorrekturschaltung 6 der zweiten Signalaufbereitungsschaltung 3' zugeordnet. Aufgrund der Korrektursignale, welche den Signalaufereitungsschaltungen 3 und 3' von den Frequenzkorrekturschaltungen 5 und 6 zugeführt werden, können diese die Trägerfrequenz des sie durchlaufenden Signals ändern, was vorzugsweise durch entsprechende Verstimmung der darin enthaltenden Oszillatoren erfolgt. Diese Funktion der Frequenzändetung führen die Signalaufbereitungsschaltungen 3 und 3' neben ihren herkömmlichen Funktionen der Filterung und Verstärkung aus.

Der beschriebene Repeater 10 wird vorzugsweise innerhalb eines Fahrzeugs, beispielsweise innerhalb eines Zuges, angebracht, in welchem sich auch Mobilstationen 9 befinden. Er fünktioniert wie folgt.

Empfängt der Repeater 10 über seine an den ersten Anschluß 1 angeschlossene Anbindungsantenne 13 ein von der Basisstation 8 kommendes Signal, führt er dieses über den Down-link Weg 11 der ersten Signalaufbereitungsschaltung 3 zu, in welcher das Signal gefiltert und verstärkt wird. Außerdem wird das Signal der Frequenzbestimmungsschaltung 4 zugeführt, welche die genaue Trägerfrequenz ermittelt und einen dieser Trägerfrequenz entsprechenden Wert ausgibt. Dieser Wert wird den Frequenzkorrekturschaltungen 5 und 6 als Eingangswert zugeführt. Die Frequenzkorrekturschaltung 5 verfügt darüberhinaus über einen Sollwert, der entweder fest eingespeichert ist oder der Frequenzkorrekturschaltung 5 durch den Informationskanal (BCCH-Kanal) des empfangenen Signals mitgeteilt wird. Sie vergleicht den tatsächlichen Wert der Trägerfrequenz mit diesem Sollwert und stellt in der Regel eine Abweichung zwischen beiden Werten fest, falls sich der gesamte Repeater-Verstärker 10 auf die Basisstation 8 zubewegt oder sich von dieser entfernt. Bei einer Bewegung in Richtung der Basisstation 8 ist die Frequenz vergrößert, bei einer Bewegung in die andere Richtung verkleinert.

Die Signalaufbereitungsschaltung 3 enthält durch das Ausgangssignal der Frequenzkorrekturschaltung 5 ein Maß dafür, wie groß die Differenz zwischen der tatsächlich empfangenen Trägerfrequenz und der Sollfrequenz ist und verstimmt ihren eingebauten Oszillator derart, daß diese Frequenzdifferenz kompensiert wird. Die Trägerfrequenz dieses Signals wird auf den Sollwert gesetzt und dem zweiten Anschluß 2, und damit der Versorgungsantenne 14, zugeführt. Die von der Versorgungsantenne 14 versorgten Mobilstationen 2 empfangen dann ein Signal mit der korrekten Frequenz, also ohne Doppler-Verschiebung.

Senden die Mobilstationen ihrerseits, so wird deren Signal über die Versorgungsantenne 14 und den zweiten Anschluß 2 der zweiten Signalaufbe-reitungsschaltung 3' zugeführt, die das Signal ebenfalls filtert und verstärkt. Da auch diese zweite Signalaufbereitungsschaltung 3' von einer Frequenzkorrekturschaltung 6 beaufschlagt wird, die ihrerseits von der Frequenzbestimmungsschaltung 4 eine Information über den Wert der von der Basisstation 8 eingehenden Trägenfrequenz erhält, kann die zweite Signalaufbereitungsschaltung 3', ebenfalls durch Verstimmen des eingebauten Oszillators, dieses, im bewegten System korrekte, Signal der Mobilstation 9 verfälschen und dem ersten Anschluß 1 und damit der Anbindungsantenne 13 zuführen. Durch den immer noch gleichen Dopplereffekt ändert sich die Frequenz dieses Signals auf dem Weg zur Basisstation 8 entsprechend und wird von der Basisstation 8 mit der korrekten Frequenz empfangen.

## Patentansprüche

1. Repeater (10) zur Übertragung hochfrequenter Signale zwischen einer Basisstation (8) und Mobilstationen (9), mit einem ersten Anschluß (1) für eine Anbindungsantenne (13), einem zweiten Anschluß (2) für eine Versorgungsantenne (14) und mindestens einer zwischen diesen Anschlüssen (1, 2) liegenden Signalaufbereitungsschaltung (3, 3'), **dadurch gekennzeichnet**, daß mindestens eine Frequenzkorrekturschaltung (5, 6) vorgesehen ist, welche die Trägerfrequenz eines von einem Anschluß (1, 2) kommenden Signals mit einer Sollfrequenz vergleicht und bei Feststellung einer Abweichung eine Frequenzkorrektur bewirkt, wobei das korrigierte Signal dem anderen Anschluß (2, 1) zugeführt wird.

2. Repeater nach Anspruch 1, **dadurch gekennzeichnet**, daß zwischen dem ersten Anschluß (1) und dem zweiten Anschluß (2) zwei parallel geschaltete Signalaufbereitungsschaltungen (3, 3') vorgesehen sind, welche über jeweils eine Weiche mit dem ersten und dem zweiten Anschluß (1, 2) verbunden sind, wobei die erste Signalaufbereitungsschaltung (3) als Down-link zur Aufbereitung der von der Basisstation (8) zu den Mobilstationen (9) gesendeten Signale und die zweite Signalaufbereitungsschaltung (3') als Up-link zur Aufbereitung der von den Mobilstationen (9) zur Basisstation (8) übertragenen Signale dient.

3. Repeater nach einem der Ansprüche 1 oder 2, **dadurch gekennzeichnet**, daß der Wert der Sollfrequenz in der Frequenzkorrekturschaltung (5, 6) fest gespeichert ist.

4. Repeater nach einem der Ansprüche 1 oder 2, **dadurch gekennzeichnet**, daß der Wert der Sollfrequenz in dem von der Basisstation (8) kommenden Signal kodiert enthalten ist.

5. Repeater nach einem der voranstehenden Ansprüche, **dadurch gekennzeichnet**, daß der oder jeder Frequenzkorrekturschaltung (5, 6) eine Frequenzbestimmungsschaltung (4) zur Bestimmung des Werts der Trägerfrequenz vorgeschaltet ist.

6. Repeater nach einem der voranstehenden Ansprüche, **dadurch gekennzeichnet**, daß die Frequenzkorrektur durch Verstimmung der in den Signalaufbereitungsschaltungen (3, 3') enthaltenen Oszillatoren erfolgt.

7. Repeater nach einem der Ansprüche 2 bis 6, **dadurch gekennzeichnet**, daß der Frequenzbestimmungsschaltung (4) bzw. den Frequenzkorrekturschaltungen (5, 6) das über den ersten Anschluß (1) empfangene Down-link-Signal zugeführt wird, die eine Frequenzkorrekturschaltung (5) das Down-link-Signal und die zweite Frequenzkorrekturschaltung (6) das Up-link-Signal, jeweils um den Betrag der festgestellten Abweichung, korrigiert.

8. Repeater nach einem der voranstehenden Ansprüche in der Verwendung in einem Fahrzeug, in welchem sich auch die Mobilstationen (9) befinden.

9. Repeater nach einem der voranstehenden Ansprüche, **dadurch gekennzeichnet**, daß die oder jede Signalaufbereitungsschaltung (3, 3') einen Verstärker aufweist.
